# NEW EUROPEAN PATENT SPECIFICATION

(11) **EP 0 544 951 B2**
(45) Date of publication and mention of the opposition decision: **05.06.2002**
(45) Mention of the grant of the patent: 06.09.1995
(21) Application number: 91311204.1
(22) Date of filing: 02.12.1991
(51) Int. Cl.: F16J 15/08

(54) **Gasket**
Flachdichtung
Joint d'étanchéité

(43) Date of publication of application: 09.06.1993
(73) Proprietor: NIPPON GASKET CO., LTD., Higashi Osaka-shi, Osaka 578 (JP); TOYOTA JIDOSHA KABUSHIKI KAISHA, Aichi-ken (JP)
(72) Inventor: Kawaguchi, Shigeru, Osaka 578 (JP); Kubouchi, Kenji, Osaka 578 (JP); Matumoto, Tadaumi, Osaka 578 (JP); Hashioka, Jin, Aichi-ken, 471 (JP); Kitamura, Takeshi, Aichi-ken (JP)
(74) Representative: Price, Paul Anthony King

(56) References cited:
- EP-A- 0 306 766
- EP-A- 0 533 357
- JP-A- 6 465 367
- JP-A- 63 293 363
- JP-A- 64 058 868
- JP-A- 64 065 367
- US-A- 3 738 558
- US-A- 3 841 289
- US-A- 4 272 085

## Description

The present invention relates to a metallic gasket according to the preamble of claim 1 for sealing between a cylinder head and a cylinder block of a diesel engine.

A known metallic gasket comprises two superimposed elastic metallic bead layers forming a bead around each combustion chamber hole, two intermediate layers located between the two bead layers and a spacer member located between the two intermediate layers around each combustion chamber hole to compensate for irregularities in the gap between the cylinder block and head (see Japanese Patent Application Laid-Open No. Sho 63-293363).

Another known metallic gasket comprises two superimposed elastic metallic bead layers forming a bead around each combustion chamber hole and two intermediate layers located between the two bead layers. An edge portion of one intermediate layer is engaged with an edge portion of the other intermediate layer to form a ring, so that both the upper and lower beads round each combustion chamber hole are almost the same (see Japanese Patent Application Laid-Open No. Sho 64-65367).

Regarding the metallic gasket disclosed in Japanese Patent Application Laid-Open No. Sho 63-293363, because a spacer member is located between the two intermediate layers around each combustion chamber hole, the number of seams around each hole between the various components is increased by one and, in use, this makes it more difficult for the gasket to act as an effective seal. To counteract this, the spacer member must be welded or stuck between the intermediate layers, but this increases the cost of manufacture. Also, the overall thickness of the intermediate layers and spacer member becomes very variable, thereby again making it more difficult for the gasket to act as an effective seal.

Regarding the metallic gasket disclosed in Japanese Patent Application Laid-Open No. Sho 64-65367, the interengaged edge portions, when compressed between a cylinder head and a cylinder block, act as a shim for the beads and thus the stress in the bead layers is reduced but significant bending stress is generated in the edge portions. Consequently, problems have occurred in that cracks or breaks form in the edge portions and then in the bead layers.

EP-A-0533357 discloses a gasket which is prior art under EPC Article 54(3).

EP-A-0306766 contains a technical disclosure which is equivalent to that of JP-A-64-65367.

US-A-3841289 discloses a gasket having a single intermediate layer. A spacer layer may be provided as a separate item (see Fig. 4) or as a folded-back strip of the intermediate layer (see Fig. 3).

According to the present invention, there is provided a metallic gasket having at least one hole therethrough, the gasket comprising:
two bead layers made of elastic metallic material and having around each hole a pair of superimposed depressions each in a respective one of the bead layers; and
first and second intermediate layers between the bead layers;
the first intermediate layer having around each hole a raised strip defined by a step in the surface of the first intermediate layer remote from the second intermediate layer and by a step in the surface of the first intermediate layer which faces the second intermediate layer, the two steps being in the same direction and the depth of the step which is adjacent to the second intermediate layer being less than the thickness of the second intermediate layer;
the second intermediate layer having around each hole a strip folded back to form a spacer layer; and
the two depressions around each hole being located radially outwards of the respective two strips of the intermediate layers;
characterized in that the raised strip is on the surface of the first intermediate layer remote from the second intermediate layer;
the folded-back strip is folded back between the rest of the second intermediate layer and the first intermediate layer; and
the first intermediate layer has a hardness value HV of 90 to 120 and the second intermediate layer has a hardness value HV of 130 to 200.

Embodiments of the present invention provide gaskets capable of preventing full-compression of the depressions of the bead layers. Each gasket provides a good seal with balanced stresses in the intermediate layers, thereby reducing the likelihood of a crack or break.

The strip(s) of the first intermediate layer may be formed by pressing.

The invention will now be described by way of non-limiting embodiment with reference to the accompanying drawings, in which:-
Fig. 1 is a plan view of part of a metallic gasket according to the present invention; and
Fig. 2 is an enlarged section view taken along line 2-2 of Fig. 1 and shows a preferred embodiment.

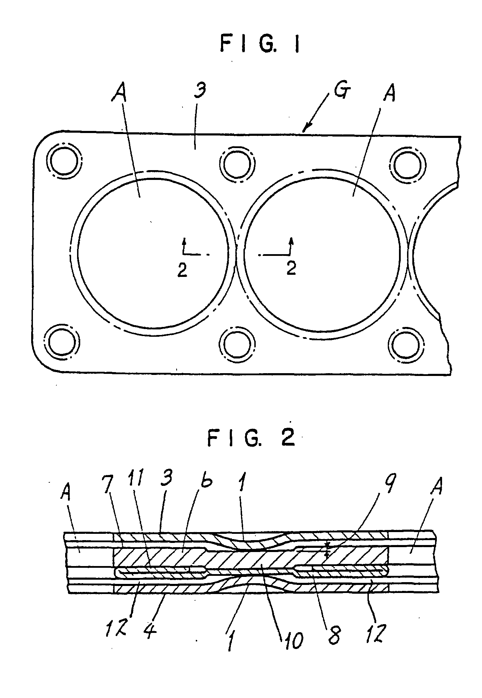

The metallic gasket G shown in Fig. 2 is a laminate-type metallic gasket having a plurality of combustion chamber holes A arranged in a straight line, two bead layers 3, 4 made of elastic metallic material with a bead and a depression 1 formed around each combustion chamber hole A and a first intermediate layer 6 between the bead layers 3, 4.

A thin second intermediate layer 8 has an HV of 130 to 200 and a thickness of 0.6 mm. The first intermediate layer 6 has an HV of 90 to 120 and a thickness of 0.6 mm. A step having a height of 0.1 mm is formed around a combustion chamber hole edge portion 7 of the first intermediate layer 6 and the second intermediate layer 8 abuts against the convex surface 10 of the layer 6. An edge portion 11 of the second intermediate layer 8 is folded back betwen the rest of the second intermediate layer 8 and the edge portion 7 of the first intermediate layer 6 to form a spacer layer 12 around a combustion chamber hole A.

The width of the spacer layer 12 can be different for different combustion chamber holes A. The step 9 of the layer 6 can be different for different hardnesses of the second intermediate layer 8 in order to vary the surface pressure applied by the gasket.

The metallic gasket according to the present invention is, in use, positioned between a cylinder block and a cylinder head and is compressed by clamping bolts or the like. The upper and lower beads of the bead layers 3, 4 are gradually compressed until the spacer layer 12 prevents further compression of the beads and full compression of the depressions 1 so as to ensure that effective seals are formed around the holes A. The stress on the bead layer 4 is reduced by the provision of the spacer layer 12 and no bending stress is generated in the spacer layer 12. Thus no cracks or breaks occur in the bead layers 3, 4.

In use, the beads of the bead layers 3, 4 on both sides are gradually reduced in height by the tightening force of the clamping bolts but the thickness of the spacer layer 12 prevents complete compression of the beads and thus the stabilized sealing effect is achieved. Also, the amount of stress in the bead layer 4 is reduced by virtue of the spacer layer 12.

Also, because the edge portion 11 of the second intermediate layer 8 is folded back to form the spacer layer 12, there is one less seam exposed to each hole A and this improves the sealing ability of the gasket. Furthermore, the spacer layer is easy to make and can be made with high accuracy.

## Claims

1. A metallic gasket (G) having at least one hole (A) therethrough, the gasket comprising:
two bead layers (3, 4) made of elastic metallic material and having around each hole (A) a pair of superimposed depressions (1) each in a respective one of the bead layers (3, 4); and
first and second intermediate layers (6, 8) between the bead layers (3, 4);
the first intermediate layer (6) having around each hole (A) a raised strip (7) defined by a step (9) in the surface of the first intermediate layer (6) remote from the second intermediate layer (8) and by a step in the surface of the first intermediate layer (6) which faces the second intermediate layer (8), the two steps (9) being in the same direction and the depth of the step which is adjacent to the second intermediate layer (8) being less than the thickness of the second intermediate layer (8);
the second intermediate layer (8) having around each hole (A) a strip (11) folded back to form a spacer layer (12); and
the two depressions (1) around each hole (A) being located radially outwards of the respective two strips (7,11) of the intermediate layers (6, 8);
**characterized in that** the raised strip (7) is on the surface of the first intermediate layer (6) remote from the second intermediate layer (8);
the folded-back strip (11) is folded back between the rest of the second intermediate layer (8) and the first intermediate layer (6): and
the first intermediate layer (6) has a hardness value HV of 90 to 120 and the second intermediate layer (8) has a hardness value HV of 130 to 200.

## Patentansprüche

1. Metallische Dichtung (G) mit wenigstens einer Durchgangsöffnung (A), wobei die Dichtung
zwei Wulstschichten (3, 4), die aus einem elastischen metallischen Material hergestellt sind und um jede Öffnung (A) ein Paar übereinanderliegender Vertiefungen (1) jeweils in einer der Wulstschichten (3, 4) haben, und
erste und zweite Zwischenschichten (6, 8) zwischen den Wulstschichten (3, 4) umfaßt,
wobei die erste Zwischenschicht (6) um jede Öffnung (A) einen erhöhten Streifen (7) hat, der durch eine Stufe (9) in der Oberfläche der ersten Zwischenschicht (6) entfernt von der zweiten Zwischenschicht (8) und durch eine Stufe in der Oberfläche der ersten Zwischenschicht (6), welche zu der zweiten Zwischenschicht (8) hinblickt, begrenzt ist, die beiden Stufen (9) in der gleichen Richtung liegen und die Tiefe der Stufe, welche der zweiten Zwischenschicht (8) benachbart ist, geringer als die Dicke der zweiten Zwischenschicht (8) ist,
die zweite Zwischenschicht (8) um jede Öffnung (A) einen Streifen (11) hat, der unter Bildung einer Abstandshalterschicht (12) zurückgefaltete ist, und
die beiden Vertiefungen (1) um jede Öffnung (A) radial von den beiden jeweiligen Streifen (7, 11) der Zwischenschichten (6, 8) nach außen liegen,
**dadurch gekennzeichnet, daß**
der erhöhte Streifen (7) auf der Oberfläche der ersten Zwischenschicht (6) entfernt von der zweiten Zwischenschicht (8) ist,
der zurückgefaltete Streifen (11) zwischen dem Rest der zweiten Zwischenschicht (8) und der ersten Zwischenschicht (6) liegt und
die erste Zwischenschicht einen Härtewert HV von 90 bis 120 und die zweite Zwischenschicht (8) einen Härtewert HV von 130 bis 200 hat.

## Revendications

1. Joint métallique (G) ayant au moins un trou (A) le traversant, le joint comportant :
deux couches (3, 4) à bourrelets formées d'une matière métallique élastique et présentant, autour de chaque trou (A), deux creux superposés (1) chacun dans l'une, respective, des couches à bourrelets (3, 4) ; et
des première et seconde couches intermédiaires (6, 8) entre les couches à bourrelets (3, 4) ;
la première couche intermédiaire (6) ayant, autour de chaque trou (A), une bande surélevée (7) définie par un épaulement (9) dans la surface de la première couche intermédiaire (6) éloignée de la seconde couche intermédiaire (8) et par un épaulement dans la surface de la première couche intermédiaire (6) qui fait face à la seconde couche intermédiaire (8), les deux épaulements (9) étant dans la même direction et la profondeur de l'épaulement qui est adjacent à la seconde couche intermédiaire (8) étant inférieure à l'épaisseur de la seconde couche intermédiaire (8) ;
la seconde couche intermédiaire (8) ayant, autour de chaque trou (A), une bande (11) repliée en arrière pour former une couche d'écartement (12) ; et
les deux creux (1) autour de chaque trou (A) étant placés radialement à l'extérieur des deux bandes respectives (7, 11) des couches intermédiaires (6, 8) ;
**caractérisé en ce que** la bande surélevée (7) est sur la surface de la première couche intermédiaire (6) éloignée de la seconde couche intermédiaire (8) ;
la bande repliée en arrière (11) est repliée en arrière entre la partie restante de la seconde couche intermédiaire (8) et la première couche intermédiaire (6) ; et
la première couche intermédiaire (6) a une valeur de dureté HV de 90 à 120 et la seconde couche intermédiaire (8) a une valeur de dureté HV de 130 à 200.
